# EUROPEAN PATENT APPLICATION

(11) **EP 1 319 598 A1**
(43) Date of publication of application: **18.06.2003**
(21) Application number: 02026754.8
(22) Date of filing: 02.12.2002
(51) Int. Cl.: B65B 21/02, B65G 57/24

(54) **Machine for packaging and palettising glass bottles**

(30) Priority: 13.12.2001 IT BO20010753
(71) Applicant: 2A S.R.L., 40033 Casalecchio Reno (Bologna) (IT)
(72) Inventor: Cracchi, Bruno, 40056 Crespellano (Bologna) (IT)
(74) Representative: Dalle Nogare, Roberto

(57) **Abstract**

It provides a double power-driven idler belt conveyor (1) on which a pallet (2) is placed where the cardboard bottoms (3) are loaded to a worker so that the same form loading base for the bottles which go on till the lading area of the same bottles. Said bottles on belt conveyor (4) are transfered through a device (8) into a moulder (9). When the arranged apparatus has formed the set of bottles in relation to the dimension of the cardboard (3)n, automatic pliers (12), grasp the bottles and put the same onto the cardboard bottoms (3). Said automatic pliers (12) bring other cardboard bottoms (3) coming from a belt conveyor (16) and put the same over the head of the bottles so forming a first level of bottles on which then, in the same way, a second level is loaded. Reached the number of wanted levels, an automatic rotating device (18) is activated and it rotates of 180° the pallet (2) so that the other side with the unloaded bottoms (3) comes to be positioned in loading area. Ending the packaging phase the exhibiting means is brought out on a double power-driven idler belt conveyor (19).

## Description

The invention refers to a new machine that in automatic and in continuous cycle actuates the packaging of glass bottles in suitable exhibiting means to be then one by one placed on the ground inside the sale point so that the consumer may take one or more of same bottles. Currently, inside the big sale stores and also inside the small stores, the glass bottles, used for wines or other goods, are manually and one by one positioned onto the racks from the employees for the subsequent taking of the consumer. Said setting working must be made manually for the necessary accurancy so to avoid crashes between the bottles which can determine their damaging and also their breaking. Moreover, such the sale is made for separate bottles, the one by one and manual setting is due, other to the above cited fragility of the exhibited goods, to the fact that are not known exhibiting means that permit the exhibition and the sale of a separate bottle. In the prior art regarding exhibiting means for goods to be later sold are known onto the market only exhibiting means with base in cardboard of other materials then covered and wrapped with transparent plastic materials that do not give the possibility to the customer of a single purchase. Also these packagings must be manually one by one placed onto the racks from the employees with considerable loss of time. Said working of positioning the bottles on the racks is consequently exacting for the employees that must make it and it determines a loss of time not compatible with the fast times of the big sale with consequent increase of the costs that come to weigh on the final price of the goods. Said situation is then not pleasant also to the operators of the small economic activities also for the hard work that this situation request. The invented machine comes to solve the above cited problems such as: 1) it avoids the single loading of the bottles on the racks providing an exhibiting means with the different bottles to be placed on the ground into the sale point, 2) it permits to the consumer to take a single bottle or the wanted number of bottles, 3) it avoids the possibility of breaking the bottles during the different movings such the same are placed in safety position. The invented machine is to be used also for packaging of plastic bottles for sale of oils or similar goods. Said plastic bottles infact, however being in plastic material, in case of crashes or of a fall can have bruises and also have breakings. The invented machine, making the packag ing of exhibiting means/bottles, consists of a double power-driven idler belt conveyor 1 on which is placed, by means of lift trucks or other means suitable for the moving, a pallet 2 formed of a wood or cardboard platform with lateral and back walls. On said pallet 2 the cardboard bottom 3 are loaded to a worker so that the same form the base on which the bottles are loaded. The unit platform 2 and the cardboard bottom 3 placed on the idler belt conveyor 1 goes automatically on till the loading area of the bottles.

Said bottles, moved by a belt conveyor 4, through a narrowing 5 are converged onto a single moving line 6 and arrive in the suitable position, given to their beating along the gate 7, they are transfered through a suitable device 8 into a moulder 9 divided into separator walls 10 to have the. necessary disposition of the bottles. To obtain the minimum encumbrance in the phase of the positioning of the bottles onto the cardbord bottoms 3, said moulder 9 provides ending reliefs 11 so to offset the files of the bottles and so having a better compacting both inside the same moulder than when the bottles come to be placed on the cardboard bottom 3. When the apparatus arranged for forming the set of bottles reaches the necessary number of bottles in relation to the dimension of the cardboard 3, the automatic pliers 12, mounted onto the bridge structure 13 and free to move running along the cross-bars 14 with movement given by electric motors 15, grasp the bottles for their neck and put the same onto the cardbord bottoms 3 that, by means of the idler belt conveyor 1, are coming in the suitable position. The same automatic pliers 12 in addition to the loading actuate also the compacting of the bottles making to adhere as much as possible each to the other so avoiding the possibility of casual crashes due to the distance of the same bottles and due to the vibrations during the movement.

When the loading of the bottles on the cardbord bottoms 3 is ended, the same automatic pliers 12, by depression on contiguous surfaces, bring other cardbord bottoms 3 coming from a second belt conveyor 16. Said cardbord bottoms 3, coming from a vertical store 17 and singolarly put on the belt conveyor 16 to a worker and going on the same belt conveyor, arrive onto the bringing point provided for the synchronism with the automatic pliers 12 and grasped from the same are placed over the head of the bottles in position on the cardbord bottoms 3. This system permits the formation of a first level of bottles on which a second level of cardboard bottoms 3 is actuated on which then other bottles are loaded with the same system provided for the first level. When the number of wanted levels is reached, an automatic rotating device 18 is activated and it permits the rotation of 180° of the pallet 2 with its loaded bottoms/bottles unit. Said rotation brings the bottoms/bottles unit to be positioned onto the other side whereas the still unloaded bottoms 3 are positioned on the side suitable for their loading and ready to be loaded with other bottles. Also for this pallet side the workings above said are made so having the complete loading of the exhibiting means which has a back wall and two lateral walls inside which the various levels of bottles alternating with the bottoms 3 are contained. Ending the packaging phase the same exhibiting means is brought out of the loading unit of the bottles going on a double power-driven idler belt conveyour 19 of the same type of the belt conveyor 1.

This permits the exit of the exhibiting means ready to be used with unloading of the same in easy way by means of the normal means. Moreover, for an use more functional of the invented machine, the unloading of the final exhibiting means is actuated from the side part in which is actuated the loading of the pallet 2. For the working cycle continuity when the final exhibiting means goes out from the loading area of the bottles a subsequent pallet, ready for the loading, automatically enters in said loading area. To actuate said operation in automatic, such as for safety reasons, photocells 20 are provided to the enter and to the exit of the loading unit of the bottles and also to the exit of the packaging line. Said photocells 20 like the motorized parts are connected to an electric power plant 21 that, through a control board, permits to set out and to make the different operations in the scheduled times.

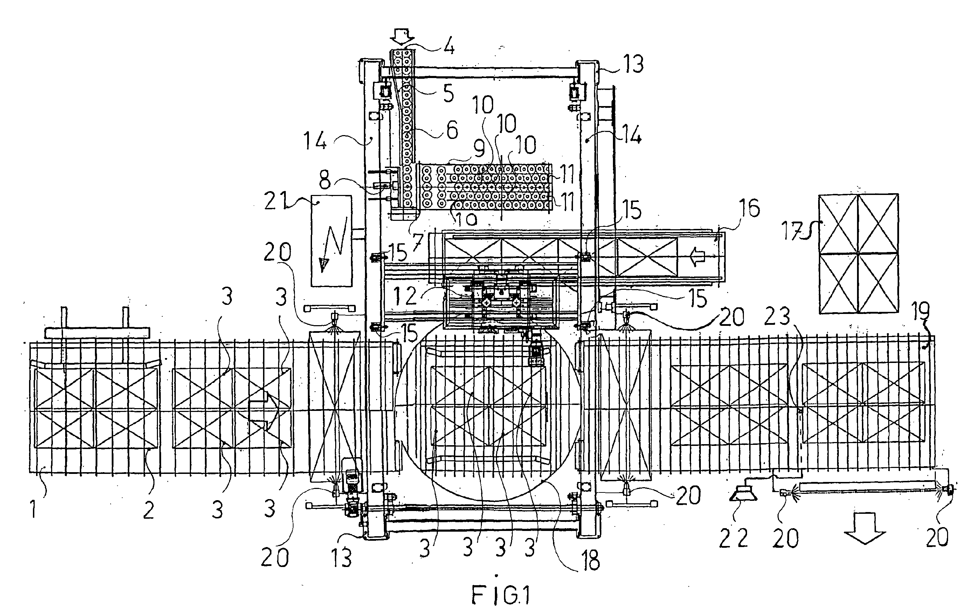

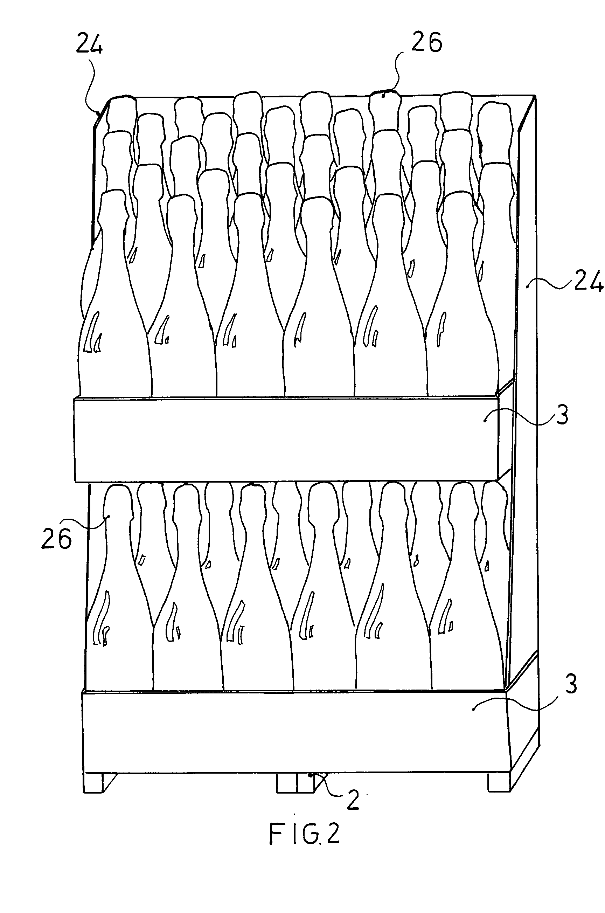

The invented machine is equipped also with an electric horn 22 connected with a sensor 23 placed in the end part of the idler belt conveyor 19 so to inform the worker when the pallet is in exit in the position suitable to be unloaded from the machine, this by means of a sound signal. The invented machine and the exhibiting means ready for the use are illustrated in an indicative way in the drawings of sheets 1 and 2. In sheet 1 fig. 1 is a, complete view of the machine in its total operative cycle. In sheet 2 fig. 2 is view of the exhibiting means in the sale point with the pallet 2 with side walls 24 and back wall 25 having two levels of bottles 26 alternating with bottoms 3. From said exhibiting means the consumer may take from the opened frontal side one or more bottles.

In the different embodiments the dimension of the exhibiting means changes on the base of the requested necessities.

## Claims

1. Packing machine of exhibiting means of glass bottles making the exhibiting means/bottles packaging, **characterized in that**
- it provides a double power-driven idler belt conveyor (1) on which a pallet (2) is placed where the cardbord bottoms (3) are loaded to a worker so that the same form loading base for the bottles which go on till the loading area of the same bottles; and that
- the bottles on belt conveyor (4) through a narrowing (5) are converged onto a single moving line (6) and, arrived in their beating along the gate (7) , they are transfered through a device (8) into a moulder (9) divided from separator walls (10) and having ending reliefs (11) so to offset the files of the bottles and having a better compacting; and that
- when the arranged apparatus has formed the set of bottles in relation to the dimension of the cardborad (3), the automatic pliers (12), on bridge structure (13) and free to run along the cross-bars (14) with movement given by electric motors (15), grasp the bottles for their neck and put the same onto the cardboard bottoms (3) coming in the suitable position; and that
- the automatic pliers (12) actuate also the compacting of the bottles while, ended the loading, by depression on contiguous surfaces, it bring other cardboard bottoms (3) coming from a belt conveyor (16) and put the same over the head of the bottles so forming a first level of bottles on which then, in the same way, a second level is loaded; and that
- reached the number of wanted levels, an automatic rotating device (18) ia activated and it rotates of 180° the pallet (2) with its loaded bottoms/bottles unit so that the other side with the unloaded bottoms (3) comes to be positioned in loading area; and that
- ending the packaging phase the exhibiting means is brought out on a double power-driven idler belt conveyor (19) having a electric horn (22) with a sensor (23) in its end part so to inform the worker when the pallet (2) with its loading is to be unloaded.

2. Packing machine of exhibiting means of glass bottles, as per claim 1, **characterized in that** to actuate the operations in automatic, such as for safety reasons, photocells (20) are provided to the enter and to the exit of the loading unit and said photocells (20) with the motorized parts are connected to an electric power plant (21) that, through a control board, permits to set out and to make the different operations.

3. Packing machine for exhibiting means of glass bottles, as per claim 1, **characterized in that** the machine is to be used also for packaging of plastic bottles that are in the same way subjected to bruises and breakings in case of crushes.
